# EUROPEAN PATENT APPLICATION

(11) **EP 4 421 455 A1**
(43) Date of publication of application: **28.08.2024**
(21) Application number: 23158210.7
(22) Date of filing: 23.02.2023
(51) Int. Cl.: G01D 11/30, G01K 1/14, G01H 1/00

(54) **MOUNTING DEVICE, SENSOR ASSEMBLY, MOTOR ASSEMBLY AND USE OF A MOUNTING DEVICE**

(71) Applicant: ABB SCHWEIZ AG, 5400 Baden (CH)
(72) Inventor: ORMAN, Maciej, 32-052 Radziszow, Malopolskie (PL); BRENKUS, Anna, 30-382 Kraków (PL)
(74) Representative: Maiwald GmbH

(57) **Abstract**

Mounting device configured to mount a sensor device to a machinery body, comprising:
- a base element (11); wherein
- the base element (11) comprises a first connection area (12) and a second connection area (13), wherein
- the first connection area (12) and the second connection area (13) are arranged on opposing surfaces of the base element (11), and wherein
- the first connection area (12) comprises at least three clamping elements (14) configured to be connected to a machinery body and the second connection area (13) comprises a connection element (15) configured to be connected to a sensor device.

## Description

### FIELD OF THE INVENTION

The present invention relates to a mounting device, a sensor assembly with such a mounting device, a motor assembly with such a sensor assembly and use of a mounting device.

### BACKGROUND OF THE INVENTION

It is known to place sensors on machinery, for example motors, for continuously monitoring selected parameters of the machinery (e.g. vibrations, temperatures, etc.). Such sensors may be a Smart Sensor Generation 2 as distributed by the applicant. However, machinery like motors may generate vibrations. These vibrations make it difficult for sensors to monitor their operation parameters. Therefore, the way of mounting the sensor to the machinery is important in order to assure proper measurements. For example, the mounting place of the sensor may be on the side of a motor directly on the cooling ribs. Such positioning of the sensor generates difficulties related to the universal nature of the mounting method because the spacing of the ribs and their dimensions depend on the motor type and as a result on the size of the motor frame. Also, the sensor may be displaced due to strong vibrations. Furthermore, resonances may occur because of the mass of the sensor or a loose connection to the motor. Existing solutions are either very expensive and bulky to install or may be prominent to resonances.

It has now become apparent, that there is a further need to provide a mounting device for sensors.

In view of the above, it is an object of the present invention to provide a mounting device configured to mount a sensor device to a machinery body. It is in particular an object of the present invention to provide a sensor assembly, a motor assembly and a use of a mounting device.

These and other objects, which become apparent upon reading the following description, are solved by the subject matter of the independent claims. The dependent claims refer to preferred embodiments of the invention.

### SUMMARY OF THE INVENTION

A first aspect of the present invention relates to a mounting device configured to mount a sensor device to a machinery body, comprising: a base element; wherein the base element comprises a first connection area and a second connection area, wherein the first connection area and the second connection area are arranged on opposing surfaces of the base element, and wherein the first connection area comprises at least three clamp elements configured to be connected to a machinery body and the second connection area comprises a connection element configured to be connected to a sensor device.

The mounting device is configured to hold or to be connected to a sensor device, so that the sensor device may be mounted to a machinery body. Such a machinery body may be a motor body or similar.

The base element may be for example a rectangular plate. Other forms or geometries may be possible. In an installed state, the sensor device is arranged at the second connection area and the mounting device is connected to the machninery body with the first connection area. Therefore, the first connection area and the second connection area are arranged on opposing sides of the base element.

The clamp elements are configured to interact with corresponding protrusions, slats or ribs of the machinery body. Alternatively, other clamp connections may be possible. Additionally, the clamping elements may also comprise a form-fitting connection.

The connection element of the second connection area is designed to form a connection with the sensor device. The term connection element here is to be understood broadly. The connection element may comprise a form-fitting, force-fitting and/or material-fitting connection. For example, the connection element may comprise a snap-in connection, a screw connection and/or an adhesive.

The at least three clamp elements allow to mount the mounting device securely to different types of machinery bodies. In particular, the mounting device may be used for different types of machineries with different corresponding protrusions, for example with different shapes, dimensions and distances. Preferably, at least two or more clamping elements are connected to the machinery body in an assembled state. It allows to fasten the mounting device to multiple corresponding protrusions, for example cooling ribs, of a motor body.

During operation, machinery generate vibrations that are critical for monitoring machinery condition parameters. In order to properly interpret the vibration pattern of the machinery, a sensor needs to measure said vibration pattern correctly, in other words without resonances or damping.

The mounting device according to the present invention with at least three clamp elements may transfer vibrations to the sensor, but at the same time may not disturb the measurements made by the sensor, introduce additional resonances, or generate false "fails". By fastening the mounting device to multiple corresponding protrusions of the machinery body, a better transmission of vibrations is possible, where resonances and/or damping are reduced or even avoided. The multiple clamping elements also allow to use the mounting device with different types of machineries and achieve reliable measurements.

In an embodiment, the clamping elements are arranged parallel to each other. In other words, the clamping elements extend parallel to each other. The parallel clamping elements are advantageous to arrange the mounting device to ribs of the machinery body.

In an embodiment, the clamping elements extend along a longitudinal or transversal axis of the base element. More precisely, the clamping elements do not cross each other. In this way, a large connection area may be possible.

In an embodiment, the clamp elements each comprise two clamping means. For example, the clamping element comprises two tongue like elements as clamping means. The clamping means of the clamping element may be designed as spring elements or may have properties of a spring. In this way, the mounting device may be connected to the machinery body by the spring force of the clamping elements.

In an embodiment, each clamping means comprises at least one slit, wherein the slit extends in a direction orthogonal to the base element. This allows to split the clamping elements in several sections, which may adapt to different circumstances of the machinery on which the mounting device may be arranged. For example, this may allow to compensate different thicknesses of a rib or slate on which the mounting device should be arranged. In other words, the slit allows the clamping elements to be more flexible.

In an embodiment, the second connection area comprises a guiding element, in particular a track or a rail. A guiding element may help to position a sensor device to the second connection area.

In an embodiment, the mounting device comprises at least seven clamping elements. The multiple clamping elements make it possible to connect the mounting device to different types of machinery. In particular to machineries or motors with different cooling ribs having different distances and thicknesses.

In an embodiment, the first connection area comprises at least one reinforcing element. The reinforcing element improves the structural stability of the mounting device.

A further aspect of the present invention relates to a sensor assembly comprising a sensor device and a mounting device as described above, wherein the sensor device is connected to the second connection area of the mounting device.

A further aspect of the present invention relates to a motor assembly comprising a sensor assembly as described above. The sensor assembly is arranged to a motor body by the second connection area.

A further aspect of the present invention relates to a use of the mounting device as described above with a sensor.

### BRIEF DESCRIPTION OF THE DRAWINGS

The accompanying drawings, which are included to provide a further understanding of the invention and are incorporated in and constitute a part of this application, illustrate an embodiment of the invention and together with the description serve to explain the principle of the invention. The drawings illustrate:
- **Figure 1**: a perspective view of an embodiment of a mounting device according to the present invention;
- **Figure 2**: another perspective view of the mounting device according to Figure 1;
- **Figure 3**: a diagram of a state of the art sensor assembly; and
- **Figure 4**: a diagram of a sensor assembly according to an embodiment of the present invention.

### DESCRIPTION OF THE EMBODIMENTS

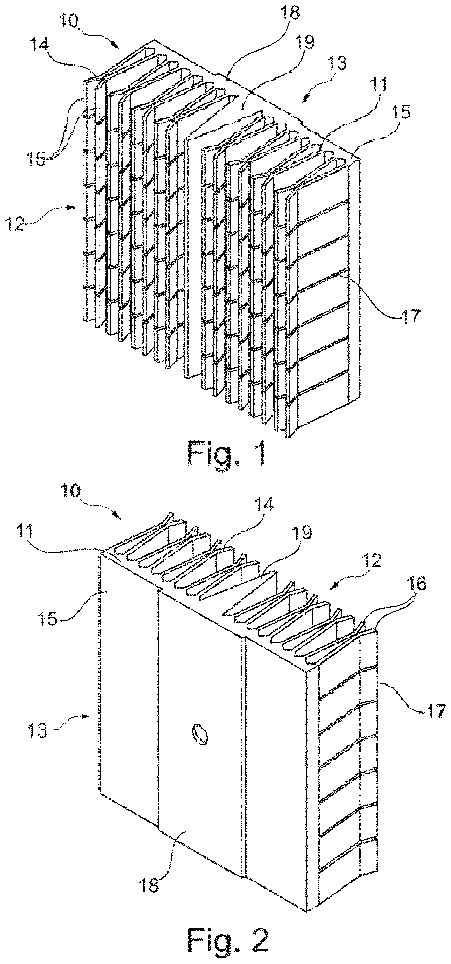

Figure 1 and Figure 2 illustrate a mounting device 10. The mounting device 10 comprises a rectangular base element 11. The base element 11 comprises two opposing sides. On one side, a first connection area 12 is located. On the opposing side, a second connection area 13 is located. In Figure 1, the first connection area 12 of the mounting device 10 can be seen.

The first connection area 12 comprises eight clamping elements 14. The mounting device 10 may comprise at least three clamping elements 14. The clamping elements 14 extend along the entire surface of the base element 11. The clamping elements 14 are arranged parallel to each other. The clamping elements 14 are identical to each other. Alternatively, the clamping elements 14 may vary from each other.

The first connection area 12 comprises a reinforcing element 19. The reinforcing element 19 is arranged in the middle of the first connection area 12. More precisely, the reinforcing element 19 extends along a middle axis of the first connection area 12. In this embodiment, there are four clamping elements 14 arranged on each side of the reinforcing element 19. Other positions or arrangements may be possible. The mounting device 10 may comprise more than one reinforcing element 19. The reinforcing element 19 extends parallel to the clamping elements 14. The reinforcing element 19 comprises a triangular geometry, wherein the peak of the triangular geometry is arranged at a free end of the reinforcing element 19. Other forms for the reinforcing element 19 may also be possible.

Each clamping element 14 comprises two clamping means 16. The clamping means 16 are designed as spring elements. Other forms are possible. The clamping means 16 of a single clamping element 14 are arranged opposite to each other. The clamping means 16 are inclined towards each other starting from the base element 11. The free ends of the clamping means 16 are inclined away from each other. Therefore, the two clamping means 16 of the clamping elements 14 form a x-shape.

The clamping elements 14 are designed to be arranged on a rib of a machinery body. A machinery body may be for example a motor body. In an assembled state, it is not necessary, that all clamping elements 14 of the mounting device 10 are connected to a corresponding protrusion or rib of the machinery body. Preferably, at least two or more clamping elements 14 are connected to the machinery body in an assembled state.

The clamping elements 14 comprise slits 17. The slits 17 extend through the whole clamping elements 14 in a direction orthogonal to the base element 11. In this embodiment, each clamping element 14 comprises six slits 17. Alternatively, the clamping elements 14 may comprise less or more slits 17. The slits 17 are evenly distributed along the clamping elements 14. The slits 17 allow the clamping elements 14 to be more flexible. In this way, the mounting device 10 may more adaptable to different types of machinery, for example motors.

Furthermore, it is possible that the dimensions and/or features of the mounting device 10 may be customized. For example, the base element 11 may have a certain thickness, the length and/or width of the mounting device 10 may be of a certain size, the mounting device 10 may have a predefined number of slits 17 or clamping elements 14, etc.

Figure 2 illustrates the second connection area 13. The second connection area 13 comprises a connection element 15. The connection element 15 may be force-fitting, form-fitting and/or material fitting. Here, a sensor device may be connected to the mounting device by material-fitting, for example by an adhesive.

The second connection area 13 comprises a guiding element 18. The guiding element 18 is designed as a rail or track. The guiding element 18 is arranged in the middle of the second connection area 13. The guiding element 18 extends in the same direction as the clamping elements 14 and the reinforcing element 19 of the first connection area 12.

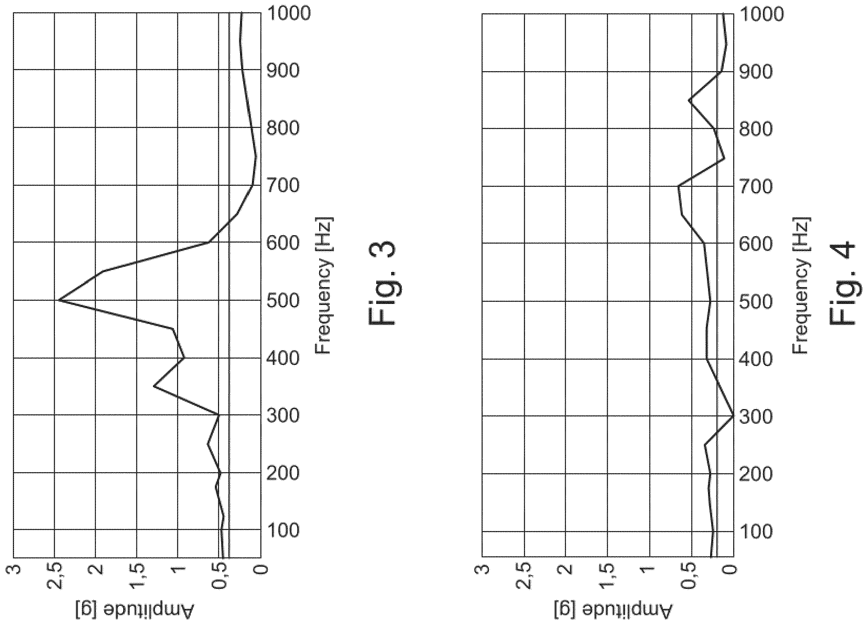

Figure 3 illustrates a diagram of the measurement of the vibration of a sensor assembly on a motor with another mounting device. Also this measurement was taken on a motor, any other machinery may be possible. The y-axis illustrates the amplitude of the motor vibration and the x-axis illustrates the frequency of the motor vibration. The straight line illustrates the actual vibration of the motor. The vibration of the motor is constant in amplitude and frequency. The other line illustrates the vibration measured by the sensor assembly mounted to the motor. For the measurement in Figure 3, a sensor is arranged to a motor body by a single clamp on a single rib of the motor. The assembly may be displaced due to vibrations. This results in the introduction of additional vibrations and resonances that do not come from the motor but are generated by the clamps. The resonances typically occur at frequencies between 250 Hz and 450 Hz. Here, several resonances occur, e.g. at 350 Hz and 500 Hz.

Even after rigidly mounting the clamp with the sensor to the single rib, the rib may begin to vibrate due to the vibrations from the running motor, because the sensor mass begins to oscillate. The action of the sensor mass on the rib causes the rib to resonate.

Figure 4 illustrates a diagram of the measurement of the vibration of a sensor assembly on a motor with a mounting device according to the present invention. Also this measurement was taken on a motor, any other machinery may be possible. Here, the vibration measurements of the sensor are much closer to the real vibrations of the motor. This allows to achieve more reliable measurements for the motor parameters.

Any disclosure and embodiments described herein relate to the mounting device, the sensor assembly, the motor assembly, the use, lined out above or below and vice versa. The benefits provided by any of the embodiments and examples equally apply to all other embodiments and examples and vice versa.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCES

- 10: mounting device
- 11: base element
- 12: first connection area
- 13: second connection area
- 14: clamping element
- 15: connection element
- 16: clamping means
- 17: slit
- 18: guiding element
- 19: reinforcing element

## Claims

1. Mounting device configured to mount a sensor device to a machinery body, comprising:
- a base element (11); wherein
- the base element (11) comprises a first connection area (12) and a second connection area (13), wherein
- the first connection area (12) and the second connection area (13) are arranged on opposing surfaces of the base element (11), and wherein
- the first connection area (12) comprises at least three clamping elements (14) configured to be connected to a machinery body and the second connection area (13) comprises a connection element (15) configured to be connected to a sensor device.

2. The mounting device according to claim 1, wherein the clamping elements (14) are arranged parallel to each other.

3. The mounting device according to claim 1 or claim 2, wherein the clamping elements (14) extend along a longitudinal or transversal axis of the base element (11).

4. The mounting device according to any one of the preceding claims, wherein the clamping elements (14) each comprise two clamping means (16).

5. The mounting device according to claim 4, wherein each clamping means (16) comprises at least one slit (17), wherein the slit (17) extends in a direction orthogonal the base element (11).

6. The mounting device according to any one of the preceding claims, wherein the second connection area (13) comprises a guiding element (18), in particular a track or a rail.

7. The mounting device according to any one of the preceding claims, wherein the mounting device (10) comprises at least seven clamping elements (14).

8. The mounting device according to any of the preceding claims, wherein the first connection area (12) comprises at least one reinforcing element (19).

9. Sensor assembly comprising a sensor device (20) and a mounting device (10) according to any one of the proceeding claims, wherein the sensor device (20) is connected to the second connection area (13) of the mounting device (10).

10. Motor Assembly comprising a sensor assembly according to claim 9.

11. Use of the mounting device (10) according to claims 1 to 8 with a sensor.
